# EUROPEAN PATENT APPLICATION

(11) **EP 0 574 626 A1**
(43) Date of publication of application: **22.12.1993**
(21) Application number: 92305612.1
(22) Date of filing: 18.06.1992
(51) Int. Cl.: A63B 49/10

(54) **Racket frame formed of a plastics compound material**

(71) Applicant: You, Chin-San, Feng Yuan City, Taichung Hsien (TW)
(72) Inventor: You, Chin-San, Feng Yuan City, Taichung Hsien (TW)
(74) Representative: Jones, Michael Raymond

(57) **Abstract**

A racket frame 10 of a plastics compound material has a shaft 12 and a head frame 14 coupled with the shaft 12. Such a racket frame 10 is provided with a hollow shell body 20 having a first portion 22 making up the shaft 14 and a second portion 24 forming the head frame 14. The first portion 22 is furnished with at least a layer of a fibre-reinforced plastic material which is made from a thermoplastic plastics material as a matrix and reinforced by a long fibre-reinforcing material. The second portion 24 contains at least a layer of fibre-reinforced plastic material which is made from a thermosetting plastics material as a matrix and reinforced by a long fibre reinforcing material. The first and the second portions 22, 24 are joined together to form a junction which is wrapped around by the fibre-reinforced plastic material of the second portion 24. The racket frame so made is provided with superior qualities of strength, stiffness, bouncing capability, toughness, and shock-absorbing capability.

## Description

This invention relates to a game racket, and more particularly to a game racket formed of a plastics compound material.

Based on the types of materials and manufacturing methods used, conventional game rackets are, in general, classified into two kinds. The first kind of game racket is made mainly from the long fibre fabrics, which are preimpregnated in a thermosetting resin and are subsequently treated in a moulding tool under heat and pressure to take the form of a game racket. Such a racket is generally provided with a good rigidity; nevertheless it has a poor shock-absorbing capability and a mediocre quality of toughness. The other kind of the game racket is made from a mixture containing short fibres and thermoplastic materials. The racket is made from such a mixture by injection moulding and is provided with good toughness and shock-absorbing properties but inadequate strength and stiffness.

According to the present invention, there is provided a racket frame formed of a plastics compound material and having a shaft and a head frame coupled with the shaft, wherein the racket frame has a hollow shell body having a first portion making up the shaft and second portion forming the head frame, with the first portion being provided with at least a layer of a fibre-reinforced plastics material which is made from a thermoplastic plastics material as a matrix and reinforced by a long fibre reinforcing material, and with the second portion being provided with at least a layer of a fibre-reinforced plastic material which is made from a thermosetting plastics material as a matrix and reinforced by a long fibre reinforcing material, the first portion having an end that is coupled with an end of the second portion in such a manner that the first portion is wrapped around by the fibre-reinforced plastics material of the second portion.

The present invention makes it possible to provide a game racket which has a sweet spot of good strength, excellent stiffness, and superior bouncing capability, and which has a tough shaft which is less vulnerable to breakage and has a good shock-absorbing capability.

Preferably the thermoplastic plastics material of the first portion is a thermoplastic multifilament binding yarn and wherein the long fibre reinforcing material of the first portion is commingled with the thermoplastic multifilament binding yarn.

Preferably the fibre-reinforced plastics material of the second portion is made from a long fibre fabric sheet preimpregnated in a thermosetting resin.

Preferably the first portion and the second portion are coupled to form a junction which is wrapped with at least a layer of the long fibre fabric sheet preimpregnated in the thermosetting resin.

Preferably the thermoplastic plastics material of the first portion has a melting point higher than the curing point of the thermosetting plastics material of the second portion.

For a better understanding of the present invention and to show how the same may be carried into effect, reference will now be made, by way of example, to the accompanying drawings, in which:
Figure 1 shows a three-dimensional view of an embodiment of a game racket frame in accordance with the present invention;
Figure 2 shows an enlarged view of a portion of the racket frame of Figure 1,
Figure 3 shows a sectional view of a portion of the racket frame Figure 1;
Figure 4 is a schematic view showing the racket frame of the present invention being put to a stiffness test;
Figure 5 is a schematic view showing the racket frame of the present invention being put to a strength test;
Figure 6 is a diagram illustrating a result of a vibration-attenuating test of the racket frame of the present invention; and
Figure 7 is a diagram illustrating a result of the vibration-attenuating test of a prior art racket frame of a plastic compound material.

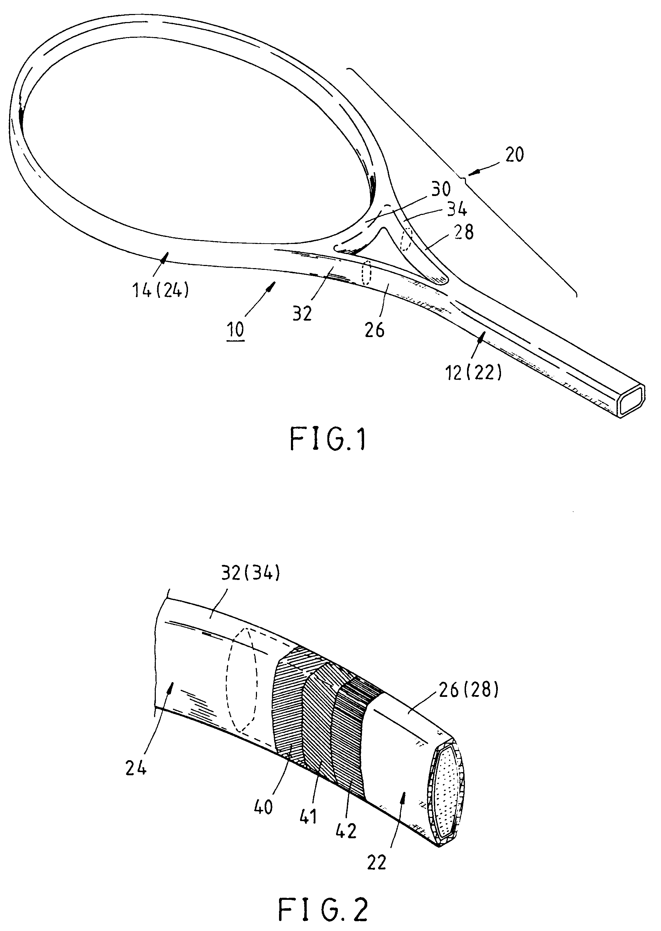

Referring to Figures 1-3 a racket frame 10 of a plastics compound material of the present invention is shown comprising a shaft 12 and a head frame 14 coupled to one end of the shaft 12.

The racket frame 10 comprises a shell body 20 made up of a first portion 22 and a second portion 24 coupled with the first portion 22.

The first portion 22 forms the shaft 12 and has one end provided with the two front branches 26 and 28. The second portion 24 makes up the head frame 14 and has a jaw portion 30 provided with the two open ends 32 and 34 which are intended for use in coupling with the two front branches 26 and 28 of the shaft 12.

In the process of making the first portion 22, a plurality of multifilament binding yarns of nylon and a plurality of fabric sheets which are made of 12K carbonaceous fibre commingled with the multifilament binding yarn and have an outer diameter of 3 inches are stacked together in a winding manner to form a primitive first portion 22, which is subsequently placed in a moulding tool to receive a treatment under a temperature of 280°C and an appropriate internal or external pressure for a period of 20 minutes. Thereafter, the treated primitive first portion 22 is permitted to cure at room temperature so as to form a first portion 22 making up the racket frame 10 of the present invention.

A primitive second portion 24 is made from a plurality of carbonaceous fibre fabric sheets which are preimpregnated in epoxy resin and are stacked together windingly. Such a primitive second portion 24 is arranged in such a manner that the fabric sheets 40, 41 and 42 located corresponding to the open ends 32 and 34 are permitted to wrap around the two front branches 26 and 28 of the first portion 22. Along with the first portion 22 which was already made previously, the primitive second portion 24 is then placed in a moulding tool having a shape of the racket frame 10, in which both the first portion 22 and the primitive second portion 24 are subjected to a treatment under a temperature of 160°C and an appropriate internal or external pressure for a period of 15 minutes before they are permitted to cure to form a racket frame 10 having a second portion 24 fastened securely to the first portion 22.

Therefore, the head frame 14 of the racket frame 10 is provided with the excellent qualities of a head frame made from a thermosetting plastic matrix and reinforced by a long fibre reinforcing material. The shaft 12 of the racket frame 10 is therefore provided with superior qualities of a shaft made from a thermoplastic plastic matrix and reinforced by a long fibre reinforcing material. On the basis of the test results, the racket frame 10 of the present invention is found to have several advantages over the prior art racket from a formed wholly of a plastics compound material. The advantages are further expounded explicitly hereinafter.

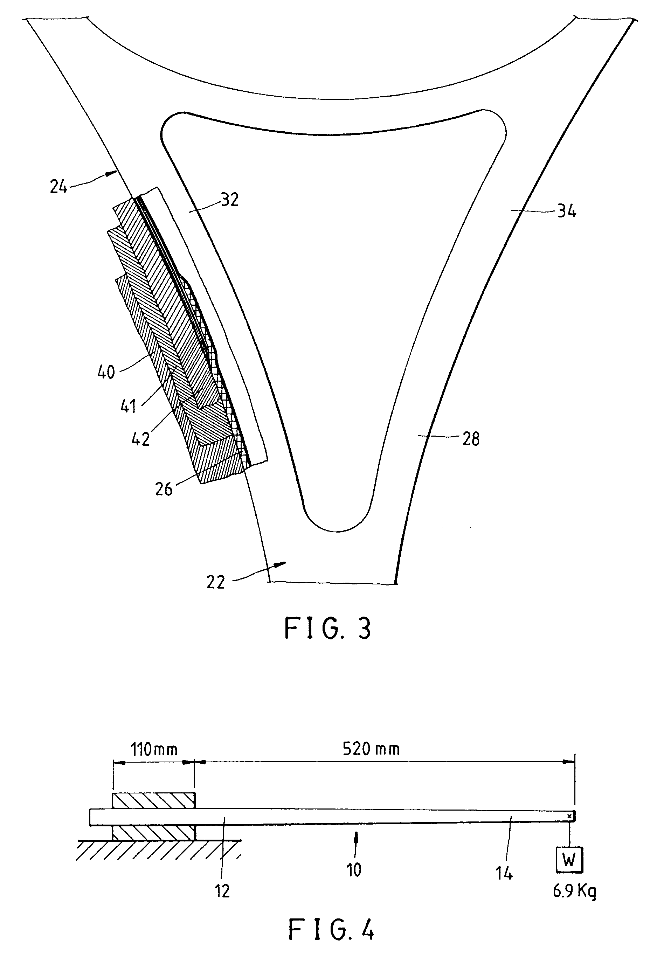

According to a stiffness test as shown in Figure 4, a portion of 110mm of the shaft 12 of the racket frame 10 was locked securely in such a manner that it was separated from the free end of the head frame 14 by a distance of 520mm. The head frame 14 was then burdened with a weight of 6.9kg for a period of one minute. The result showed that the distortion quantity of the racket frame 10 was 72RA, which was less than the distortion quantity of 75RA obtained in a similar test of a prior art racket frame. It is therefore apparent that the racket frame 10 of the present invention has a quality of stiffness superior to that of the prior art racket frame.

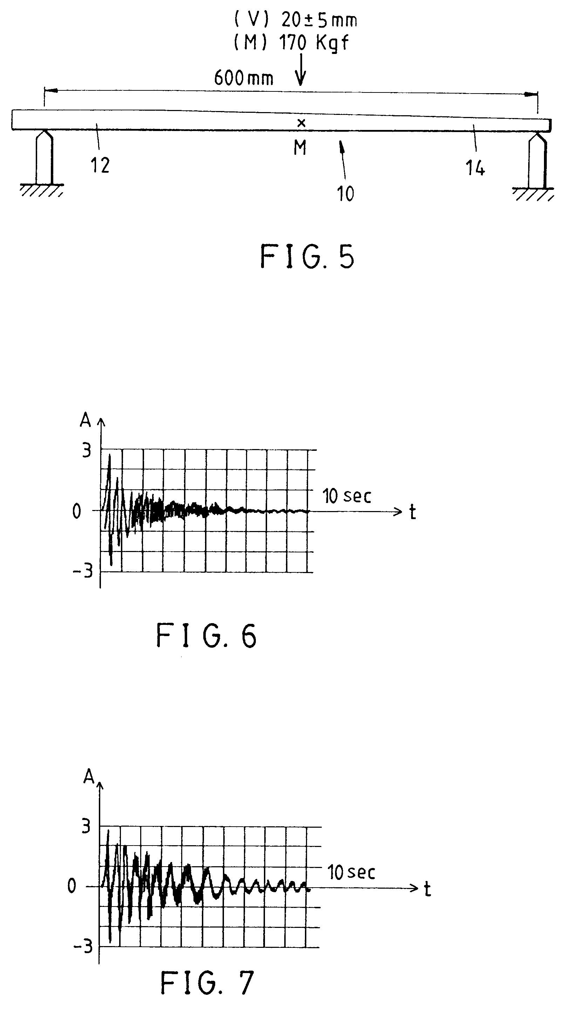

As shown in Figure 5 illustrating a testing of the strength of the shaft 12, there were two fulcrums located respectively near one end of the shaft 12 and at a top portion of the head frame 14 in such a manner that they were separated by a distance of 600mm. A gravity force of 170kgf was exerted on a midpoint M between the two fulcrums at a velocity of 20+5mm per minute. The test result showed that the racket frame 10 in question was found to have suffered no damage at all. A prior art racket frame of plastics compound material was tested in a similar manner as described above under a gravity force of 120kgf and was subsequently found to have suffered structural damage.

The results of vibration-attenuating tests of the racket frame 10 of the present invention and the prior art racket frame showed that the racket frame 10 of the present invention has a shock-absorbing capability superior to that of the prior art racket frame, as shown in Figures 6 and 7.

## Claims

1. A racket frame formed of a plastics compound material and having a shaft and a head frame coupled with the shaft, wherein the racket frame has a hollow shell body having a first portion making up the shaft and second portion forming the head frame, with the first portion being provided with at least a layer of a fibre-reinforced plastics material which is made from a thermoplastic plastics material as a matrix and reinforced by a long fibre reinforcing material, and with the second portion being provided with at least a layer of a fibre-reinforced plastic material which is made from a thermosetting plastics material as a matrix and reinforced by a long fibre reinforcing material, the first portion having an end that is coupled with an end of the second portion in such a manner that the first portion is wrapped around by the fibre-reinforced plastics material of the second portion.

2. A racket frame according to claim 1, wherein the thermoplastic plastics material of the first portion is a thermoplastic multifilament binding yarn and wherein the long fibre reinforcing material of the first portion is commingled with the thermoplastic multifilament binding yarn.

3. A racket frame according to claim 1 or 2, wherein the fibre-reinforced plastics material of the second portion is made from a long fibre fabric sheet preimpregnated in a thermosetting resin.

4. A racket frame according to claim 3, wherein the first portion and the second portion are coupled to form a junction which is wrapped with at least a layer of the long fibre fabric sheet preimpregnated in the thermosetting resin.

5. A racket frame according to any preceding claim, wherein the thermoplastic plastics material of the first portion has a melting point higher than the curing point of the thermosetting plastics material of the second portion.
